Europäisches Patentamt

European Patent Office

Office européen des brevets

(19)

(11) Veröffentlichungsnummer: **0 071 722**
**B1**

(12) **EUROPÄISCHE PATENTSCHRIFT**

(45) Veröffentlichungstag der Patentschrift:
**03.10.84**

(21) Anmeldenummer: **82105361.8**

(22) Anmeldetag: **18.06.82**

(51) Int. Cl.³: **C 08 L 77/02,** F 42 B 27/10, F 42 B 13/20

(54) **In kleine Teile zerfallbare hochgefüllte Polyamidformmasse.**

(30) Priorität: **01.08.81 DE 3130569**

(43) Veröffentlichungstag der Anmeldung:
**16.02.83 Patentblatt 83/7**

(45) Bekanntmachung des Hinweises auf die Patenterteilung:
**03.10.84 Patentblatt 84/40**

(84) Benannte Vertragsstaaten:
**CH DE FR GB IT LI SE**

(56) Entgegenhaltungen:
**GB - A - 1 077 027**
**GB - A - 2 092 274**
**US - A - 2 995 090**
**US - A - 3 123 003**

(73) Patentinhaber: **CHEMISCHE WERKE HÜLS AG, - RSP Patente / PB 15 - Postfach 13 20, D-4370 Marl 1 (DE)**

(72) Erfinder: **Juretzek, Heinz, Dodostrasse 7, D-4400 Münster (DE)**
Erfinder: **Sindermann, Paul, Lindenaststrasse 47, D-8500 Nürnberg (DE)**
Erfinder: **Kriesten, Wolfgang, Dr., Oderbruchstrasse 28, D-4370 Marl (DE)**

## Beschreibung

Aufgabe der Erfindung ist es, eine mit feinteiligen Metallen hochgefüllte Formmasse auf der Basis von Polyamiden bereitzustellen, welche durch Spritzgiessen zu Formkörpern verarbeitbar ist. Diese Formkörper sollen unter üblichen Bedingungen ausreichend formstabil sein, d.h. sie sollen z.B. beim Fallen nicht zerbrechen, andererseits sollen sie durch erhöhte Krafteinwirkung, z.B. mit Hilfe eines Sprengstoffes, in feine, kleinste Teilchen zerfallen, die in wenigen Metern Entfernung von dem Zerfallsort praktisch nicht mehr auffindbar sind. Insbesondere soll die Formmasse als Füllkörper für Hand- oder Wurfgranaten für Übungszwecke einsetzbar sein. Für diesen Zweck muss der Formkörper ein Gewicht haben, das einer scharfen Granate entspricht.

Es ist zwar bekannt, die splitterwirksamen Metallpartikel im Innern eines solchen Munitionskörpers in einem thermoplastischen Kunststoff, wie Polystyrol geringer Schlagzähigkeit, anzuordnen. Bei den bisher bekannt gewordenen Arbeitsweisen hat man in einer Hohlform die Metallsplitter mit flüssigem Kunststoff und anschliessend mit dem Geschossmantel umhüllt, wobei dies durch Spritzgiessen erfolgen kann.

Diese aufwendige Arbeitsmethode war bisher erforderlich, da die bekannten thermoplastischen Kunststoffe sich nicht zu so hoch gefüllten Formmassen verarbeiten lassen.

Der Nachteil des Standes der Technik wird überwunden durch die in kleine Teile zerfallbare, auf Spritzgiessmaschinen verarbeitbare, mit feinteiligen Metallen gefüllte Polyamidformmasse der Erfindung, die neben den üblichen Hilfsstoffen besteht aus 5 bis 20 Gew.-% Polylaurinlactam mit einer rel. Viskosität von 1,6 bis 2,2 (DIN 53 727) und 80 bis 95 Gew.-% feinteiligen Metallen.

Geeignetes niedermolekulares Polylaurinlactam wird in bekannter Weise durch hydrolytische Polymerisation erhalten. Polylaurinlactam, das durch anionische Polymerisation in Gegenwart von metallischen Füllstoffen hergestellt wird, ist zu spröde und zerfällt nicht in die notwendigerweise kleinen Teilchen. Die relative Viskosität, gemessen nach DIN 53 727 liegt bei 1,6 bis 2,2, insbesondere bei 1,6 bis 1,8. Der Anteil des Polylaurinlactams in der Formmasse beträgt insbesondere 5 bis 15 Gew.-%. Als feinteilige Metalle eignen sich Kupfer, Bronze, in sehr feiner Form, in Form von Pulver oder Splittern in einer Grösse von < 100 µ ≙ 0,100 mm. Insbesondere beträgt der Metallanteil der Formmasse 85 bis 95 Gew.-%.

Die Bestandteile können auf Knetern zu der Formmasse verarbeitet werden, wobei das Polylaurinlactam in Form von Granulaten oder als Pulver bereitgestellt werden kann.

Selbstverständlich können der Formmasse Farbstoffe, Gleitmittel, Stabilisatoren und andere Hilfsstoffe, falls gewünscht oder erforderlich, in üblichen Mengen zugesetzt werden.

Die Formmasse lässt sich trotz ihres hohen Metallgehaltes auf Spritzgussmaschinen zu Formkörpern verarbeiten. Selbstverständlich lässt sich die Formmasse auch zu anderen Formkörpern als zu Füllkörpern für Hand- oder Wurfgranaten verarbeiten, da diese eine für viele Fälle ausreichende Schlagfestigkeit besitzen, z.B. sind sie geeignet zur Herstellung von Platten mit schallschluckenden Eigenschaften. Die Dichte der Formmassen beträgt 3,5 bis 4,8, insbesondere 4,2 bis 4,5 g/cm³.

## Patentansprüche

1. In kleine Teile zerfallbare, auf Spritzgiessmaschinen verarbeitbare, mit feinteiligen Metallen hochgefüllte Polyamidformmasse, neben üblichen Hilfsstoffen bestehend aus 5 bis 20 Gew.-% Polylaurinlactam mit einer rel. Viskosität von 1,6 bis 2,2 (DIN 53 727) und 80 bis 95 Gew.-% feinteiligen Metallen.

2. Verwendung der Formmasse nach Anspruch 1 zur Herstellung von Füllkörpern für Hand- oder Wurfgranaten.

## Claims

1. A polyamide moulding material which is capable of being broken down into small particles and capable of being processed on an injection moulding apparatus and which has a high content of finely particulate metal filler, the material being composed, apart from conventional adjuvants, of 5 to 20 % by weight of polylauryllactam of relative viscosity from 1.6 to 2.2 (DIN 53 727), and 80 to 95 % by weight of finely particulate metal(s).

2. The use of moulding material as claimed in Claim 1 for the production of filler for hand grenades or mortar shells.

## Revendications

1. Masse à mouler de polyamide fortement chargée de métaux en fines particules, pouvant être transformée sur des machines à mouler par injection, pouvant se désagréger en petits fragments et comprenant, outre des additifs usuels, de 5 à 20 % de polylaurolactame ayant une viscosité relative de 1,6 à 2,2 (DIN 53 727) et de 80 à 95 % en poids de métaux en fines particules.

2. Utilisation de la masse à mouler selon la revendication 1, pour la fabrication de corps de remplissage pour grenade à main ou à lancer.